# EUROPÄISCHE PATENTSCHRIFT

(11) **EP 1 768 317 B1**
(45) Veröffentlichungstag und Bekanntmachung des Hinweises auf die Patenterteilung: **14.03.2018**
(21) Anmeldenummer: 06120762.7
(22) Anmeldetag: 15.09.2006
(51) Int. Cl.: H04L 12/403, H04L 12/417, G08C 19/00, H04J 3/06

(54) **SENSOR UND VERFAHREN ZUR DATENÜBERTRAGUNG VON EINEM SENSOR ZU EINEM STEUERGERÄT**
SENSOR AND METHOD FOR TRANSMITTING DATA FROM A SENSOR TO A CONTROL DEVICE
CAPTEUR ET PROCÉDÉ DE TRANSMISSION DE DONNÉES D'UN CAPTEUR À UNE UNITÉ DE COMMANDE

(30) Priorität: 26.09.2005 DE 102005045918
(43) Veröffentlichungstag der Anmeldung: 28.03.2007
(73) Patentinhaber: ROBERT BOSCH GMBH, 70442 Stuttgart (DE)
(72) Erfinder: Kottke, Thomas, 71139 Ehningen (DE); Weiss, Timo, 70825 Korntal (DE)

(56) Entgegenhaltungen:
- Florian Hartwich ET AL: "CAN Network with Time Triggered Communication", , 27. Oktober 2000 (2000-10-27), XP055254559, Gefunden im Internet: URL:http://canbus.cz/pages/download/CAN Network with Time Triggered Communication.pdf [gefunden am 2016-03-02]
- LEEN G ET AL: "TTCAN: a new time-triggered controller area network", MICROPROCESSORS AND MICROSYSTEMS, IPC BUSINESS PRESS LTD. LONDON, GB, Bd. 26, Nr. 2, 17. März 2002 (2002-03-17), Seiten 77-94, XP004339936, ISSN: 0141-9331, DOI: 10.1016/S0141-9331(01)00148-X
- HARTWICH F ET AL: "Timing in the TTCAN network", PROCEEDINGS OF THE INTERNATIONAL CAN CONFERENCE, XX, XX, 28. Februar 2002 (2002-02-28), Seiten 1-8, XP002294580,

## Beschreibung

### Stand der Technik

Die Erfindung geht aus von einem Sensor bzw. von einem Verfahren zur Datenübertragung von einem Sensor zu einem Steuergerät nach der Gattung der unabhängigen Patentansprüche.

Aus DE 103 42 044 A1 ist es bereits bekannt, einen Quasi-Bus mit Sensoren als Busstationen und einem Steuergerät als Empfänger der Daten vorzusehen. Darin wird beschrieben, wie die Sensoren durch Energieübertragung zum Senden angeregt werden.

In Florian Hartwich ET AL: "CAN Network with Time Triggered Communication", 27. Oktober 2000 (2000-10-27), XP855254559, Gefunden im Internet: URL: http://canbus.czjpagesjdownload/CAN Network with Time Triggered Communication.pdf [gefunden am 2016-03-02], ist ein CAN-Netzwerk bzw. CAN-Bus (CAN = Controller Area Network) mit zeitlich ausgelöster Kommunikation bestehend aus CAN-Controllern mit autonomer Nachrichtendisposition offenbart.

LEEN G ET AL: "TTCAN: a new time-triggered controller area network", MICROPROCESSORS AND MICROSYSTEMS, IPC BUSINESS PRESS LTD. LONDON, GB, Bd. 26, Nr. 2, 17. März 2002 (2002-03-17), Seiten 77-94, XP004339936, ISSN: 0141-9331, DOI: 10.1016/S0141-9331(01)00148-X, zeigt ein CAN-Netzwerk mit zeitlich ausgelöster Kommunikation.

In HARTWICH F ET AL: "Timing in the TTCAN network", PROCEEDINGS OF THE INTERNATIONAL CAN CONFERENCE, XX, XX, 28. Februar 2002 (2002-02-28), Seiten 1-8, XP002294580, ist offenbart, wie ein Takt eines TTCAN (Time-Triggered Controller Area Network; CAN mit zeitlich ausgelöster Kommunikation) mit einer externen Zeitbasis oder einem weiteren TTCAN synchronisiert werden kann.

### Vorteile der Erfindung

Der erfindungsgemäße Sensor bzw. das erfindungsgemäße Verfahren zur Datenübertragung von einem Sensor zu einem Steuergerät haben dem gegenüber den Vorteil, dass nunmehr das Steuergerät durch einen Synchronimpuls die Sensoren anweist, ihre Daten zu übertragen. Dazu starten die angeschlossenen Sensoren in Abhängigkeit vom erkannten Synchronimpuls jeweils einen Zähler. Der Zählerstand des Zählers wird mit einem Schwellwert verglichen. Dieser Schwellwert wird in Abhängigkeit von einem Zählerstand, der bei einer vorhergehenden Datenübertragung erreicht wurde und einem vorgegebenen Wert eingestellt. Wird dieser Schwellwert überschritten, so hat der Sensor seinen Zeitschlitz erreicht und kann starten. In diesem Zeitschlitz werden dann die Daten an das Steuergerät übertragen. Durch diesen variablen Schwellwert werden die Taktabweichungen zwischen den Sensoren kompensiert, und es sind keine Schutzintervalle zwischen den Zeitschlitzen der einzelnen Sensoren notwendig, um eine Überlappung der Daten, die übertragen werden, zu vermeiden. Damit ist es nicht notwendig, etwaige lokal vorhandene Oszillatoren untereinander zu synchronisieren. Durch den Wegfall der Schutzzeiten zwisehen den Zeitschlitzen kann der Nettodurchsatz an Sensordaten erheblich gesteigert werden. Die Adaption durch den Schwellwert gelingt durch die Auswertung des Zählerstands bei einer vorhergehenden Datenübertragung. Der Wert, der voreingestellt ist oder einprogrammiert, bedeutet, dass die Sensoren in einer vorgegebenen Zuordnung zueinander eingebaut werden müssen. Der voreingestellte Wert berücksichtigt dann, dass die Sensoren kaskadenartig zeitlich hintereinander ihre Daten senden können. Durch den Bezug auf den eigenen Zählerstand werden die Frequenzabweichungen, die durch die lokalen Oszillatoren bedingt sein können, kompensiert. Damit ist es insbesondere möglich, günstige Oszillatoren zu verwenden, die ungenauer sein können. Dies verbilligt den erfindungsgemäßen Sensor und ein Quasi-Bussystem, das mit diesem Sensor aufgebaut wird. Der Zähler endet jedoch mit dem nächsten Synchronimpuls, so dass dieser Zählerstand dann für die Bestimmung des Schwellwerts für die nächste Datenübertragung verwendet wird.

Durch den in den abhängigen Ansprüchen aufgeführten Maßnahmen und Weiterbildungen sind vorteilhafte Verbesserungen des im unabhängigen Patentanspruch angegebenen Sensors bzw. Verfahrens möglich.

Besonders vorteilhaft ist, dass in Abhängigkeit von dem Zählerstand auch die Zeitdauer für den Zeitschlitz bestimmt wird. Dies ermöglicht, auch Abweichungen in der Dauer des Zeitschlitzes zu kompensieren.

In einer vorteilhaften Weiterbildung ist vorgesehen, den Zählerstand, aus dem der Zeitpunkt, zu dem der Zeitschlitz beginnt und die Zeitdauer des Zeitschlitzes bestimmt werden, aus einem Mittelwert vorangegangener Zählerstände zu ermitteln. D. h. die vorangegangenen Zählerstände sind die Zählerstände, die erreicht wurden bei den vorangegangenen Übertragungen.

### Zeichnung

Ausfiihrungsbeispiele der Erfindung sind in der Zeichnung dargestellt und werden in der nachfolgenden Beschreibung näher erläutert.

Es zeigen:
- Figur 1: ein Blockschaltbild eines Quasi-Bussystems mit dem erfindungsgemäßen Sensor,
- Figur 2: ein Blockschaltbild des erfindungsgemäßen Sensors,
- Figur 3: ein erstes Signalzeitdiagramm,
- Figur 4: ein zweites Signalzeitdiagramm,
- Figur 5: ein drittes Signalzeitdiagramm,
- Figur 6: ein viertes Signalzeitdiagramm und
- Figur 7: ein Flussdiagramm.

### Beschreibung

Auf peripheren Sensoren basierende Insassenschutzsysteme nutzen meist Stromschnittstellen zur Übertragung von Sensordaten an ein zentrales Steuergerät. Bei Stromschnittstellen erfolgt beispielsweise die Datenübertragung in einer synchronen Buskonfiguration von Sensoren, die parallel an die Busleitung angeschlossen sind. Dabei wird von dem Steuergerät ein Arbeitstaktsignal erzeugt, das den peripheren Sensoren zugeführt wird, um den Beginn eines neuen Datenrahmens zu signalisieren. Hierbei handelt es sich um ein niederfrequentes Signal, das typischerweise alle 500 oder 1000 Mikrosekunden wiederholt wird. Wird das Arbeitstaktsignal in peripheren Sensoren empfangen, so verzögert jeder Sensor seine Datenübertragung um eine gewisse Zeit T*ₛₗₒₜ*. Diese Zeiten sind dabei so gewählt, dass sich die Datenpakete der einzelnen Sensoren nicht überlappen und somit ein Zeitmultiplexbetrieb realisiert wird.

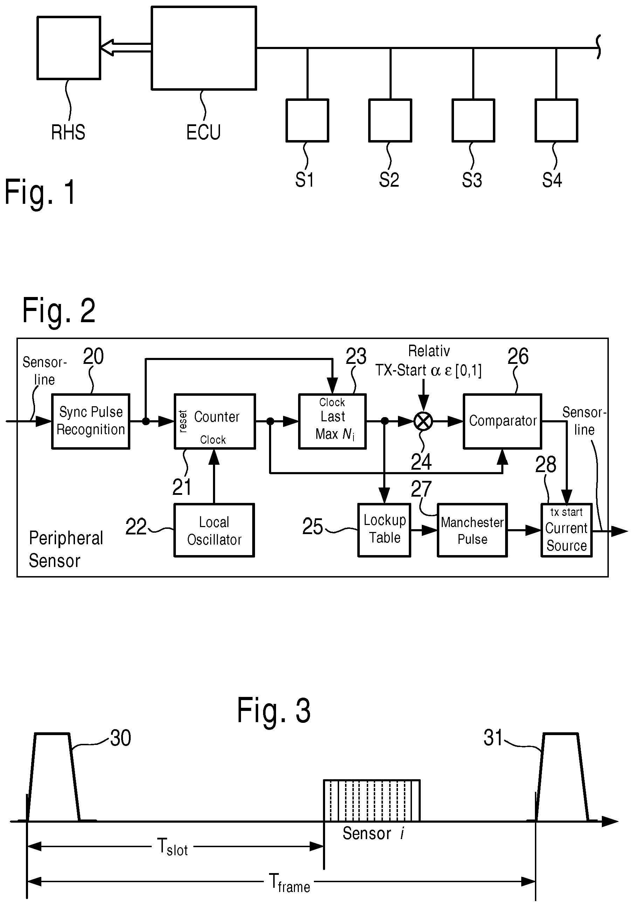

Figur 3 erläutert dies in einem Signalzeitdiagramm. Ein Synchronimpuls 30 wird zu den Sensoren mit einer Periodendauer T*_{frame}* übertragen, sodass nach der Zeit T*_{frame}* ein weiterer Synchronimpuls 31 vom Steuergerät ausgesendet wird. Ein jeweiliger Sensor *i* überträgt nach der Zeit T*ₛₗₒₜ* seine Daten an das Steuergerät.

Nach der Identifikation des Synchronimpulses durch den einzelnen Sensor mittels einer Synchronimpulserkennung wird die individuelle Verzögerung der einzelnen Sensoren auf Basis von beispielsweise der jeweiligen lokalen Oszillatoren bestimmt. Diese weisen jedoch aufgrund von Chargenunterschieden, Temperatur und Alter deutliche Abweichungen vom nominalen Takt auf. Bei der Übertragung im Zeitmultiplex müssen aus diesem Grund Schutzzeiten zwischen den Datenpaketen vorgesehen werden, die so dimensioniert sein müssen, dass eine Überlappung der Datenpakete in verschiedenen Betriebssituationen vermieden wird. Allerdings hat dies zur Folge, dass signifikante Teile des Datenrahmens nicht zur Kommunikation genutzt werden können. Hierdurch werden Übertragungsmodi und Datenraten stark absinken, obwohl ihre Nettokommunikationszeit eigentlich in die Rahmendauer T*_{frame}* passen würde. Die Synchronimpulserkennung ist entweder als Schaltung oder als Softwareelement oder als ASIC implementiert.

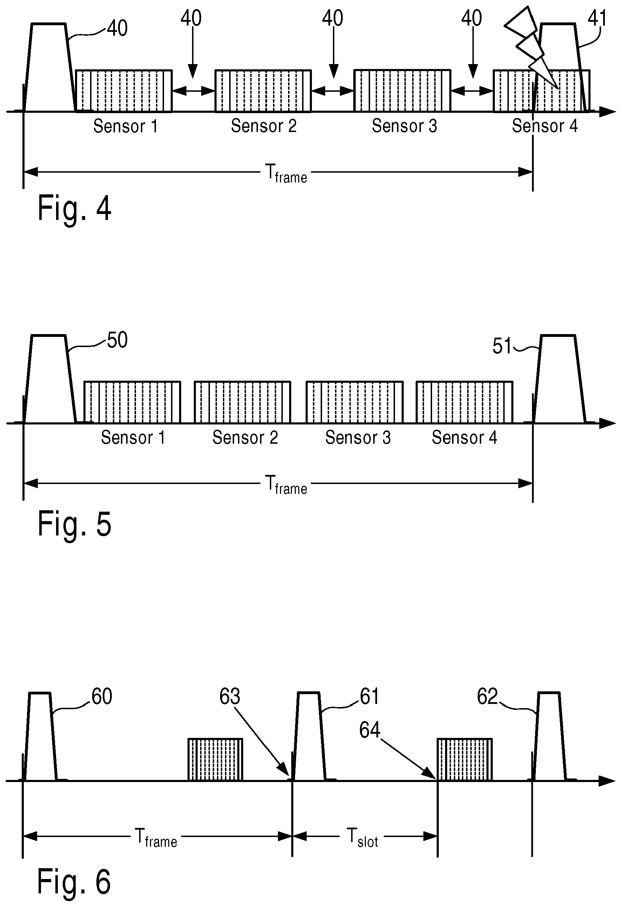

Figur 4 zeigt eine solche Situation. Wiederum wird ein Synchronimpuls 40 vom Steuergerät ausgesendet. Dann übertragen die Sensoren 1, 2, 3 und 4, getrennt durch Schutzzeiten, ihre Datenpakete. Die Schutzzeiten müssen jedoch so bemessen sein, dass das Datenpaket des Sensors 4 bereits über die Zeit T*_{frame}* hinaus geht und damit mit dem Synchronimpuls 41 kollidiert.

Erfindungsgemäß werden daher ein Verfahren und ein entsprechender Sensor vorgeschlagen, mit denen es möglich ist, die Schutzzeiten zwischen den Datenpaketen der einzelnen Sensoren so zu reduzieren, dass alle Datenpakete mit optimaler Länge in die Zeit T*_{frame}* passen. Erfindungsgemäß wird hierbei ein Taktunterschied zwischen den einzelnen Sensoren, der durch die lokalen Oszillatoren hervorgerufen sein kann, kompensiert. Damit wird dann der Durchsatz der Sensordaten erheblich gesteigert.

Bislang wurden die Zeitschlitze für die Übertragung der Sensordaten auf Basis der lokalen Oszillatoren in den Sensoren bestimmt, die untereinander starke Taktabweichungen aufweisen können, weshalb Schutzzeiten zwischen den Buszugriffen notwendig werden. Die Verzögerung bis zum Sendestart wurde meist mit internen Zählern realisiert, die mit dem Takt des lokalen Oszillators hoch gezählt wurden. Sobald der Zählerstand eine fixe voreingestellte Schwelle erreicht hatte, konnte die Sendung begonnen werden. Hier setzt nun die Erfindung an. Nunmehr wird die Zählerschwelle dynamisch bestimmt, um einen Gleichlauf der Zeitschlitze zu ermöglichen, ohne die lokalen Oszillatoren aufwendig untereinander synchronisieren zu müssen. Durch den Wegfall oder die Reduktion der Schutzzeiten, die erfindungsgemäß möglich werden, kann der Nettodurchsatz an Sensordaten erheblich gesteigert werden. Diese dynamische Schwelle wird mit Hilfe eines Registers und einer Multiplikation bestimmt. Das Register speichert den maximalen Zählerstand *Nᵢ* des *i*-ten Sensors aus dem letzten Datenrahmen. Der Zähler wird durch einen Synchronimpuls gestartet und durch den dann folgenden Synchronimpuls beendet. Dann liegt der Zählerstand *Nᵢ* vor. Es enthält somit ein zeitliches Maß für die Länge eines Datenrahmens bzgl. des jeweiligen lokalen Oszillators. Es ist ersichtlich, dass Inhalte dieser Register je nach lokalem Takt stark voneinander abweichen können. Genau dieser Umstand kann jedoch genutzt werden, um die auftretenden Takttoleranzen fast vollständig zu kompensieren. Hierzu ist lediglich der maximale Zählerstand des letzten Datenrahmens im *i*-ten Sensor mit einer Zahl *αᵢ* zu multiplizieren, wobei αᵢ ∈ [0,1] ist und danach als Zählerschwelle für den folgenden Datenrahmen zu verwenden. Die Zahl *αᵢ* ist fest eingespeichert für den jeweiligen Sensor, sodass die Sensoren vorbestimmt zueinander eingebaut werden müssen. Die Zahl *αᵢ* repräsentiert also den *relativen* Start für die Datenübertragung des *i*-ten Sensors. Da bei der Multiplikation der maximale Zählerstand *Nᵢ* als Bezugsgröße genommen wird, sind die absoluten Zeitpunkte *αᵢ* x *Nᵢ* für alle Sensoren identisch. Somit kann ein Gleichlauf der Zeitschlitze zwischen den Sensoren erreicht werden, selbst wenn die Frequenzen der lokalen Oszillatoren stark von einander abweichen. Als Startbedingung wird eine feste Schwelle genommen, um danach in das erfindungsgemäße Verfahren bzw. die erfindungsgemäße Konfiguration des Sensors zu verwenden.

Darüber hinaus können nicht nur Zeitschlitze zwischen den Sensoren synchronisiert werden, sondern auch die Dauer der Zeitschlitze, also der Sendepulse, da diese meist auch aus dem Takt des lokalen Oszillators abgeleitet werden. Bei der Verwendung von Manchesterimpulsen, wie sie in den beschriebenen Übertragungssystemen üblich sind, lässt sich die Kompensation der Pulsdauer besonders leicht durch einen Look-up Table realisieren, wobei der letzte maximale Zählerstand *Nᵢ* als Zeiger verwendet wird. Als Tabelleneintrag wird diejenige Pulsdauer zurückgegeben, die unter Berücksichtigung der mit *Nᵢ* gemessenen Frequenzabweichungen möglichst nahe an die nominelle Pulsdauer herankommt. Für aufwendigere Pulsformen muss der komplette Sendepuls in verschiedenen Abtastraten in einem Festspeicher abgelegt werden.

Als weitere erfindungsgemäße Variante ist eine zeitliche Mittelung der Zählerstände *Nᵢ* denkbar. Dies würde das Verfahren robuster gegen kurzzeitige Störungen machen.

Figur 6 erläutert in einem Signalzeitdiagramm das erfindungsgemäße Verfahren. Wiederum wird ein Synchronimpuls 60 ausgesandt. Beim allerersten Aussenden eines Datenpakets nimmt der Sensor *i* einen festen Schwellwert an und sendet sein Datenpaket. Der Zählerstand *Nᵢ* bis zum Erreichen des nächsten Synchronpulses 61 wird abgespeichert, um für die Bestimmung des Schwellwerts im nächsten Takt verwendet zu werden. Dieser Wert *Nᵢ* wird mit einem vorprogrammierten Wert *αᵢ* multipliziert, um einen Schwellwert für diesen Zeitschlitz zu bestimmen. Wenn der Zähler diesen Schwellwert *αᵢ* x *Nᵢ* erreicht, dann sendet der Sensor nach der Zeit T*ₛₗₒₜ*. Ist die Zeit T*_{frame}* abgelaufen, wird dann erneut ein Synchronimpuls ausgesendet.

Figur 1 zeigt eine Konfiguration mit den erfindungsgemäßen Sensoren. Ein Steuergerät ECU steuert ein Personenschutzmittel RHS an. Das Steuergerät ECU ist weiterhin über eine Zweidrahtleitung mit den Sensoren S1, S2, S3 und S4 verbunden. Die Sensoren sind parallel an diese Leitung angeschlossen. Die Sensoren arbeiten erfindungsgemäß und verwenden das erfindungsgemäße Verfahren.

Figur 2 erläutert in einem Blockschaltbild den erfindungsgemäßen Aufbau der Sensoren S1, S2, S3 oder S4. Die Leitung ist mit einer Schaltung, die als Synchronimpulserkennung wirkt, 20 verbunden. Dies kann beispielsweise amplitudenabhängig oder signalformabhängig geschehen. Ist der Synchronimpuls durch die Schaltung 20 erkannt, so wird ein Zähler 21 gestartet, der sich eines lokalen Oszillators 22 bedient. Darüber hinaus wird ein Register 23 angesteuert, das den aktuellen Wert des Zählers 21 abspeichert. Der Zähler wird beendet durch einen erneuten Synchronimpuls. Dann speichert das Register 23 den letzten Wert *Nᵢ* ab. Mit diesem letzten Wert *Nᵢ* wird der Schwellwert bestimmt, indem *Nᵢ* durch den Multiplikator 24 mit dem voreingestellten Wert *αᵢ* multipliziert wird. In einem Vergleicher 26 wird dann der aktuelle Zählerstand des Zählers 21 mit diesem Schwellwert *αᵢx Nᵢ* verglichen. Ist dieser Schwellwert erreicht, so wird durch den Vergleicher 26 die Sendung der Sensordaten durch eine Stromquelle 28 freigegeben. Der maximale Zählerstand *Nᵢ* wird vom Register 23 aber auch einem Look-up Table 25 zugeführt, um dort die Periodendauer für den Zeitschlitz, in dem der Sensor seine Daten sendet, zu bestimmen. Wie oben beschrieben wird dann aus dem Look-up Table 25 ein entsprechender Manchesterimpuls 27 generiert, um damit die Stromquelle 28 zu modulieren. Das Register 23 und der Multiplikator 24 sind als Schaltung implementiert, wobei dies auch in Software realisiert sein kann.

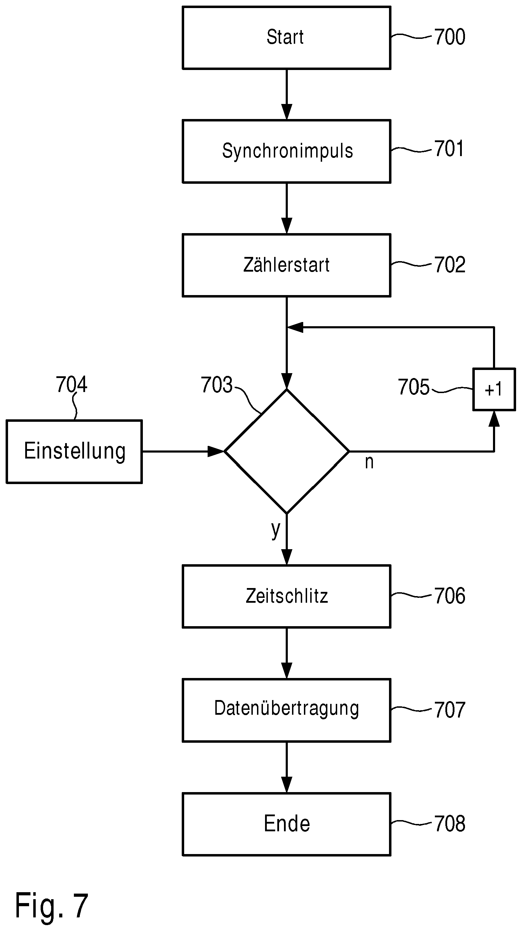

Figur 7 erläutert in einem Flussdiagramm das erfindungsgemäße Verfahren. In Verfahrensschritt 700 wird das erfindungsgemäße Verfahren beispielsweise durch das Einschalten eines Fahrzeugs gestartet. In Verfahrensschritt 701 sendet das Steuergerät ECU einen Synchronimpuls auf die Leitung zu den Sensoren S1, S2, S3 und S4 aus. Mit dem Synchronimpuls wird der Zähler in Verfahrensschritt 702 gestartet. In Verfahrensschritt 703 wird dieser Zählerstand mit einem Schwellwert verglichen. Dieser Schwellwert wird aber in Verfahrensschritt 704 eingestellt und zwar aus dem letzten Zählerstand, der multipliziert wird mit einem voreingestellten Wert *αᵢ.* Der letzte Zählerstand stammt aus der letzten Datenübertragung, also aus dem letzten Zeitschlitz. Der Zähler zählt so lange, bis ein erneuter Synchronimpuls kommt, sodass der Zählerstand die Zeit T*_{frame}* repräsentiert. Demnach wird in Verfahrensschritt 703 mit diesem Schwellwert der Zählerstand verglichen. Ist der Schwellwert nicht erreicht, dann wird in Verfahrensschritt 705 der Zähler inkrementiert und weiterhin mit dem Schwellwert im Verfahrensschritt 703 verglichen. Ist der Schwellwert erreicht, dann wird in Verfahrensschritt 706 die Datenübertragung freigegeben, die dann in Verfahrensschritt 707 vorgenommen wird. In Verfahrensschritt 708 ist durch den Ablauf der Zeit T*_{frame}* das Verfahren beendet. Wie oben dargestellt, kann aus dem Zählerstand auch die Zeitdauer des Zeitschlitzes bestimmt werden.

## Patentansprüche

1. Sensor mit einer Synchronimpulserkennung (20), die in Abhängigkeit von einem erkannten Synchronimpuls einen Zähler (21) startet, **gekennzeichnet durch** einen Vergleicher (26), der einen ersten Zählerstand des Zählers (21) mit einem Schwellwert (αᵢ x Nᵢ) vergleicht, wobei der Sensor (S1, S2, S3, S4) in Abhängigkeit von diesem Vergleich einen Zeitschlitz bestimmt, in den der Sensor (S1, S2, S3, S4) Daten an ein Steuergerät (ECU) überträgt, und durch eine Schaltung (23, 24), die den Schwellwert in Abhängigkeit von einem vorgegebenen Wert (αᵢ) und einem zweiten Zählerstand (Nᵢ) bestimmt, wobei der zweite Zählerstand (Nᵢ) bei einer vorangegangenen Datenübertragung erreicht wurde, wobei der Schwellwert (αᵢ x Nᵢ) bestimmt wird, indem der zweite Zählerstand (Nᵢ) mit dem vorgegebenen Wert (αᵢ) multipliziert wird, wobei der vorgegebene Wert (αᵢ) bedeutet, dass Sensoren (S1, S2, S3, S4) in einer vorgegebenen Zuordnung zueinander eingebaut sind, und berücksichtigt, dass die Sensoren kaskadenartig (S1, S2, S3, S4) zeitlich hintereinander ihre Daten senden.

2. Sensor nach Anspruch 1, **dadurch gekennzeichnet, dass** ein Speicher vorgesehen ist, aus dem in Abhängigkeit vom zweiten Zählerstand (Nᵢ) eine Zeitdauer für den Zeitschlitz geladen wird.

3. Sensor nach Anspruch 1 oder 2, **dadurch gekennzeichnet, dass** eine Auswerteschaltung vorgesehen ist, die den zweiten Zählerstand als Mittelwert vorangegangener Zählerstände bestimmt.

4. Verfahren zur Datenübertragung zu einem Sensor (S1, S2, S3, S4) zu einem Steuergerät (ECU), **gekennzeichnet durch** folgende Verfahrensschritte:
- Erkennen eines Synchronimpulses (701)
- Starten eines Zählers (702)
- Vergleichen eines ersten Zählerstands des Zählers (22) mit einem Schwellwert (αᵢ x Nᵢ), wobei in Abhängigkeit von diesem Vergleich ein Zeitschlitz für die Datenübertragung bestimmt wird
- Bestimmung des Schwellwerts (αᵢ x Nᵢ) in Abhängigkeit von einem vorangegangenen Wert (αᵢ) und einem zweiten Zählerstand (Nᵢ), wobei der zweite Zählerstand (Nᵢ) bei einer vorangegangenen Datenübertragung erreicht wurde, wobei der Schwellwert (αᵢ x Nᵢ) bestimmt wird, indem der zweite Zählerstand (Nᵢ) mit dem vorgegebenen Wert (αᵢ) multipliziert wird, wobei der vorgegebene Wert (αᵢ) bedeutet, dass Sensoren (S1, S2, S3, S4) in einer vorgegebenen Zuordnung zueinander eingebaut sind, und berücksichtigt, dass die Sensoren kaskadenartig (S1, S2, S3, S4) zeitlich hintereinander ihre Daten senden.

5. Verfahren nach Anspruch 4, **dadurch gekennzeichnet, dass** eine Zeitdauer für den Zeitschlitz in Abhängigkeit von dem zweiten Zählerstand bestimmt wird.

6. Verfahren nach Anspruch 4 oder 5, **dadurch gekennzeichnet, dass** der zweite Zählerstand (Nᵢ) als Mittelwert vorangegangener Zählerstände bestimmt wird.

## Claims

1. Sensor having a sync pulse detection unit (20) that takes a detected sync pulse as a basis for starting a counter (21), **characterized by** a comparator (26) that compares a first counter reading of the counter (21) with a threshold value (αᵢ × Nᵢ), wherein the sensor (S1, S2, S3, S4) takes this comparison as a basis for determining a time slot in which the sensor (S1, S2, S3, S4) transmits data to a controller (ECU), and by a circuit (23, 24) that determines the threshold value on the basis of a prescribed value (αᵢ) and a second counter reading (Nᵢ), the second counter reading (Nᵢ) having been reached upon a preceding data transmission, wherein the threshold value (αᵢ × Nᵢ) is determined by virtue of the second counter reading (Nᵢ) being multiplied by the prescribed value (αᵢ), the prescribed value (αᵢ) signifying that sensors (S1, S2, S3, S4) are installed in a prescribed association with one another and taking into consideration that the sensors send their data in cascaded fashion (S1, S2, S3, S4) at successive times.

2. Sensor according to Claim 1, **characterized in that** a memory is provided from which a length of time for the time slot is loaded on the basis of the second counter reading (Nᵢ).

3. Sensor according to Claim 1 or 2, **characterized in that** an evaluation circuit is provided that determines the second counter reading as an average of preceding counter readings.

4. Method for data transmission to a sensor (S1, S2, S3, S4) to a controller (ECU), **characterized by** the following method steps:
- detecting a sync pulse (701)
- starting a counter (702)
- comparing a fist counter reading of the counter (22) with a threshold value (αᵢ × Nᵢ), wherein this comparison is taken as a basis for determining a time slot for the data transmission
- determining the threshold value (αᵢ × Nᵢ) on the basis of a preceding value (αᵢ) and a second counter reading (Nᵢ), the second counter reading (Nᵢ) having been reached upon a preceding data transmission, wherein the threshold value (αᵢ × Nᵢ) is determined by virtue of the second counter reading (Nᵢ) being multiplied by the prescribed value (αᵢ), the prescribed value (αᵢ) signifying that sensors (S1, S2, S3, S4) are installed in a prescribed association with one another and taking into consideration that the sensors send their data in cascaded fashion (S1, S2, S3, S4) at successive times.

5. Method according to Claim 4, **characterized in that** a length of time for the time slot is determined on the basis of the second counter reading.

6. Method according to Claim 4 or 5, **characterized in that** the second counter reading (Nᵢ) is determined as an average of preceding counter readings.

## Revendications

1. Capteur doté d'une détection d'impulsion de synchronisation (20) qui démarre un compteur (21) en fonction d'une impulsion de synchronisation détectée, **caractérisé par** un comparateur (26) qui compare un premier état de comptage du compteur (21) à une valeur de seuil (αᵢ x Nᵢ), le capteur (S1, S2, S3, S4) définissant, en fonction de cette comparaison, une tranche de temps dans laquelle le capteur (S1, S2, S3, S4) transmet des données à un contrôleur (ECU), et par un circuit (23, 24) qui définit la valeur de seuil en fonction d'une valeur prédéfinie (αᵢ) et un deuxième état de comptage (Nᵢ), le deuxième état de comptage (Nᵢ) ayant été atteint lors d'une transmission de données précédente, la valeur de seuil (αᵢ x Nᵢ) étant définie en multipliant le deuxième état de comptage (Nᵢ) par la valeur prédéfinie (αᵢ), la valeur prédéfinie (αᵢ) signifiant que les capteurs (S1, S2, S3, S4) sont installés selon une association mutuelle prédéfinie et tenant compte du fait que les capteurs (S1, S2, S3, S4) envoient leurs données successivement dans le temps à la manière d'une cascade.

2. Capteur selon la revendication 1, **caractérisé en ce qu'**il existe une mémoire depuis laquelle une durée pour la tranche de temps est chargée en fonction du deuxième état de comptage (Nᵢ).

3. Capteur selon la revendication 1 ou 2, **caractérisé en ce qu'**il existe un circuit d'interprétation qui définit le deuxième état de comptage en tant que valeur moyenne des états de comptage précédents.

4. Procédé de transmission de données à un capteur (S1, S2, S3, S4) à un contrôleur (ECU), **caractérisé par** les étapes suivantes :
- détection d'une impulsion de synchronisation (701)
- démarrage d'un compteur (702)
- comparaison d'un premier état de comptage du compteur (22) à une valeur de seuil (αᵢ x Nᵢ), une tranche de temps pour la transmission de données étant définie en fonction de cette comparaison
- définition de la valeur de seuil (αᵢ x Nᵢ) en fonction d'une valeur précédente (αᵢ) et d'un deuxième état de comptage (Nᵢ), le deuxième état de comptage (Nᵢ) ayant été atteint lors d'une transmission de données précédente, la valeur de seuil (αᵢ x Nᵢ) étant définie en multipliant le deuxième état de comptage (Nᵢ) par la valeur prédéfinie (αᵢ), la valeur prédéfinie (αᵢ) signifiant que les capteurs (S1, S2, S3, S4) sont installés selon une association mutuelle prédéfinie et tenant compte du fait que les capteurs (S1, S2, S3, S4) envoient leurs données successivement dans le temps à la manière d'une cascade.

5. Procédé selon la revendication 4, **caractérisé en ce qu'**une durée de la tranche de temps est définie en fonction du deuxième état de comptage.

6. Procédé selon la revendication 4 ou 5, **caractérisé en ce que** le deuxième état de comptage (Nᵢ) est défini en tant que valeur moyenne des états de comptage précédents.
